# EUROPÄISCHE PATENTANMELDUNG

(11) **EP 2 227 994 A2**
(43) Veröffentlichungstag der Anmeldung: **15.09.2010**
(21) Anmeldenummer: 10155511.8
(22) Anmeldetag: 04.03.2010
(51) Int. Cl.: A47J 47/16

(54) **Deckelhalter**

(30) Priorität: 10.03.2009 DE 102009011925
(71) Anmelder: Hunold + Knoop Kunststofftechnik GmbH, 59590 Geseke (DE)
(72) Erfinder: Michel, Horst, 33154, Salzkotten (DE); Hunold, Mathias, 59590, Geseke (DE)
(74) Vertreter: Ostermann, Thomas

(57) **Zusammenfassung**

Die Erfindung betrifft einen Deckelhalter, enthaltend einen Fuß mit einer Standfläche zum Abstellen derselben auf eine Aufstandsebene und wenigstens einen von dem Fuß abragenden Tragelement zum Halten eines Deckels, wobei sich der Fuß langgestreckt und im Wesentlichen senkrecht zur Standfläche erstreckt, dass das Tragelement in einem vorgegebenen Abstand zu der Standfläche des Fußes mit demselben in einem Befestigungspunkt so verbunden ist, dass der Deckel parallel oder geneigt zur der Standfläche des Fußes orientiert an dem Tragelement gehalten ist, und dass bei einer zu der Aufstandsebene lotrechten Projektion des Tragelements auf die Aufstandsebene mindestens ein Teilbereich des Tragelements außerhalb der Standfläche abgebildet ist.

## Beschreibung

Die Erfindung betrifft einen Deckelhalter, enthaltend einen Fuß mit einer Standfläche zum Abstellen derselben auf eine Aufstandsebene und wenigstens einen von dem Fuß abragenden Tragelement zum Halten eines Deckels.

Ferner betrifft die Erfindung einen Deckelhalter, enthaltend eine Montageplatte mit einer sich in einer Anlageebene E erstreckenden Anlagefläche zur Wandbefestigung der Montageplatte und wenigstens ein an der Montageplatte drehbar gehaltenes Tragelement zum Halten eines Deckels, wobei das wenigstens eine Tragelement von einer Anlageposition, in der eine Erstreckungsrichtung des Tragelements parallel zu der Anlageebene orientiert gehalten ist, in eine Halteposition drehbar ist, in der sich das Tragelement in einer Halteebene erstreckt, die gegenüber der Anlageebene um einen Winkel geneigt angeordnet ist.

Aus der DE 296 08 718 U1 ist eine Ablagevorrichtung für Küchenutensilien, insbesondere Topfdeckel bekannt. Der Topfdeckelhalter besteht im Wesentlichen aus zwei Bauteilen: Einem wannenförmig ausgebildeten, auf einer Ablagefläche aufzustellenden Fußelement und einem von dem Fußelement im Wesentlichen vertikal abragenden Stützelement. Unter Anlehnung an das vertikal orientierte Stützelement wird ein Topfdeckel in einer im Wesentlichen vertikalen bzw. gegen die Vertikale leicht geneigten Orientierung mit einem Randbereich in das wannenförmige Fußelement gestellt. Das Stützelement ist an seinem dem Fußelement abgewandten freien Ende von zwei V-förmig zueinander angestellten Stützarmen gebildet. Die Anstellung der Stützarme zueinander ist hierbei so gewählt, dass der Deckel entweder mit einem tellerförmigen Abdeckabschnitt an die Oberfläche der Stützarme angelegt wird, oder mit einem Halteknauf bzw. einem den Halteknauf und den Abdeckabschnitt verbindenden Steg in dem V-förmigen Zwischenraum der Stützarme gehalten ist. Nachteilig an der bekannten Ablagevorrichtung ist, dass das Fußelement aufgrund seiner Wannenform einen vergleichsweise großen Teil der Arbeitsfläche belegt, der für andere Arbeiten oder das Abstellen weiterer Kochutensilien nicht zur Verfügung steht. Darüber hinaus wird aufgrund der im Wesentlichen vertikalen Orientierung des Deckels in dem Deckelhalter an dem Deckel befindliches Kondensat in das wannenförmige Fußelement abgeleitet. Nach Gebrauch muss der Deckelhalter demzufolge gereinigt und getrocknet werden.

Aus der DE 295 08 798 U1 ist ein wandgehaltener Deckelhalter bekannt, der im Wesentlichen aus einer an einer Wand befestigten Montageplatte und einem Tragelement zum Halten des Deckels besteht. Um eine möglichst platzsparende Anordnung dieses Deckelhalters zu ermöglichen, ist das Tragelement über zwei Gelenke drehbar an der Montageplatte gehalten. Hierdurch ist es möglich, das Tragelement aus einer Nichtgebrauchsposition, in der das Tragelement an die Wand geklappt angeordnet ist, in eine Halteposition zu verschwenken, in der ein Deckel auf das Tragelement auflegbar ist. Nachteilig hierbei ist, dass das Tragelement hierzu durch Drehung um eine erste Gelenkachse von der Nichtgebrauchsposition in eine Zwischenposition und von der Zwischenposition durch Drehung um eine zweite Gelenkachse in die Halteposition verbracht wird. Dieses zweistufige Verschwenken wirkt sich negativ auf die Handhabbarkeit des Topfdeckelhalters aus und sorgt insbesondere dafür, dass eine Einhandbedienung erschwert bzw. unmöglich ist. Die Einhandbedienung ist dann vorteilhaft, wenn mit der anderen Hand ein Topfdeckel gehalten wird, der in den noch nicht in seiner Halteposition befindlichen Deckelhalter eingebracht werden soll.

Aufgabe der vorliegenden Erfindung ist es, einen Topfdeckelhalter derart weiterzubilden, dass dieser besonders platzsparend angeordnet werden kann und einer Verschmutzung des Deckelhalters während des Gebrauchs vorgebeugt wird. Ferner sollen die Handhabung vereinfacht und der Bedienkomfort gesteigert werden.

Zur Lösung dieser Aufgabe ist die Erfindung in Verbindung mit dem Oberbegriff des Patentanspruchs 1 **dadurch gekennzeichnet, dass** sich der Fuß langgestreckt und im Wesentlichen senkrecht zur Standfläche erstreckt, dass das Tragelement in einem vorgegebenen Abstand zu der Standfläche des Fußes mit demselben in einem Befestigungspunkt so verbunden ist, dass der Deckel parallel oder geneigt zur der Standfläche des Fußes orientiert an dem Tragelement gehalten ist, und dass bei einer zu der Aufstandsebene lotrechten Projektion des Tragelements auf die Aufstandsebene mindestens ein Teilbereich des Tragelements außerhalb der Standfläche abgebildet ist.

Der besondere Vorteil der Erfindung besteht darin, dass der Deckel in einem gewissen Abstand oberhalb der als Aufstandsebene dienenden Arbeitsfläche gehalten wird. Indem das Tragelement zumindest in einem Teilbereich über die Standfläche des Deckelhalters hinausragt, ist es möglich, die Arbeitsfläche unterhalb des Deckels anderweitig zu nutzen. Hierdurch wird die Raumausnutzung verbessert. Insbesondere in kleinen Küchen mit kleinen Arbeitsflächen bedeutet dies einen Zugewinn an Arbeitskomfort und ermöglicht ein höheres Maß an Ordnung. Darüber hinaus ist der fußstehende Deckelhalter auf freistehenden Küchenblöcken, den so genannten Kochinseln, einsetzbar, bei denen ein wandhängender Deckelhalter in Ermangelung einer Wand keine Verwendung finden kann. Ferner wird durch die im Wesentlichen arbeitsflächenparallele Orientierung des Deckels in dem Deckelhalter ein Herauslaufen des an dem Deckel niedergeschlagenen Kondensats vermieden. Auf diese Weise ist sowohl der Deckelhalter selbst als auch die unter ihm befindliche Arbeitsfläche vor Verschmutzung geschützt, so dass die Sauberkeit bzw. Hygiene in der Küche steigt. Darüber hinaus reduziert sich der Reinigungsaufwand.

Nach einer bevorzugten Ausführungsform der Erfindung ist bei einer zu der Aufstandsebene lotrechten Projektion des Tragelementes auf die Aufstandsebene ein projizierter Bereich von dem freien Ende bis zu einem Längsmittelpunkt des Tragelementes außerhalb der Standfläche des Fußes abgebildet. Indem das Tragelement um wenigstens die Hälfte seiner Länge über die Standfläche des Fußes hinausragt, wird der unterhalb des auf dem Tragelement gehaltenen Deckels befindliche freie Bereich der Arbeitsfläche vergrößert. Das Abstellen von Kochutensilien, Zutaten oder Rezeptbüchern wird hierdurch weiter vereinfacht.

Nach einer Weiterbildung der Erfindung ist der Fuß zu einer dem freien Ende des Tragelementes gegenüberliegenden Rückseite des Deckelhalters geneigt ausgebildet. Vorteilhaft wird hierdurch der Schwerpunkt des Fußes in Richtung der den Deckel tragenden Tragelementes abgewandten Rückseite verschoben. Hierdurch erhöht sich die Kippsicherheit des auf der Arbeitsfläche abgestellten Deckelhalters, so dass eine stabile Aufstellung auch bei einem weit über die Standfläche hinausragenden Tragelement bzw. einem schweren Deckel gewährleistet ist.

Nach einer Weiterbildung der Erfindung ist der Abstand des Befestigungspunktes von der Standfläche derart gewählt, dass zwischen dem gehaltenen Deckel und der Aufstandsebene ein Behälter positionierbar ist. Hierdurch kann beispielsweise ein Topf bzw. eine Pfanne auf der Arbeitsfläche unterhalb des gehaltenen Deckels positioniert werden. Ebenso kann der Fuß derart neben dem Herd aufgestellt sein, dass das Tragelement über den auf dem Herd befindlichen Topf ragt und der Deckel zumindest zum Teil oberhalb des zugehörigen Topfes gehalten wird.

Nach einer Weiterbildung der Erfindung ist der Fuß massiv und/oder aus einem relativ schweren Material ausgeformt. Als schwere Materialien kommen hierbei beispielsweise Metalle (Aluminium, Edelstahl, Messing) oder mineralische Werkstoffe (Keramik, Gips) in Frage. Durch die Verwendung relativ schwerer Materialien und/oder die massive Ausführung des Fußes bildet derselbe ein Gegengewicht zu dem auf dem Tragelement gehaltenen Deckel, so dass die Stabilität und Kippsicherheit des Deckelhalters insgesamt erhöht wird.

Nach einer Weiterbildung der Erfindung ist der Befestigungspunkt an einem der Standfläche gegenüberliegenden Endabschnitt des Fußes angeordnet. Vorteilhaft wird hierdurch die Bauhöhe des Fußes und letztlich des Deckelhalters insgesamt begrenzt. Der derart kompakt bauende Deckelhalter kann somit vorteilhaft auch unterhalb eines in der Küche wandhängend montierten Gegenstand - bzw. eines Hängeschranks oder einer Waage - aufgestellt werden.

Nach einer Weiterbildung der Erfindung erstreckt sich das Tragelement in einer Halteebene, die gegenüber der Aufstandsebene um einen Winkel um bis zum ± 20° geneigt angeordnet ist. Durch die parallele bzw. geringfügig geneigte Anordnung des Tragelementes im Bezug zur Aufstandsfläche wird gewährleistet, dass der Arbeitsraum unterhalb des gehaltenen Deckels gut zugänglich und nutzbar ist. Darüber hinaus stellt die zur Arbeitsfläche im Wesentlichen parallele Anordnung des Deckels auf dem Tragelement sicher, dass das Kondensat sich in dem Deckel selbst sammelt und nicht über einen Deckelrand hinaus auf die darunter befindliche Arbeitsfläche läuft.

Nach einer Weiterbildung der Erfindung ist das Tragelement aus einem Verbindungsabschnitt, mit dem das Tragelement an dem Fuß gehalten ist, und aus zwei von dem Verbindungsabschnitt abragende, zueinander V-förmig angestellte Tragarme gebildet. Indem die Tragarme V-förmig zueinander angestellt und horizontale beabstandet angeordnet sind, bildet sich zwischen diesen ein Zwischenraum. In den Zwischenraum kann ein Halteknauf und/oder ein den Halteknauf und den Abdeckabschnitt verbindender Steg des auf dem Tragelement gehaltenen Deckels zumindest abschnittsweise angeordnet sein. Der Deckel selbst kann hierdurch im Bereich seines Abdeckabschnitts auf dem Tragelement aufliegen. Der Knauf "verschwindet" in dem Zwischenraum, so dass der Deckel im Wesentlichen parallel zur Halteebene auf dem Tragelement abgelegt wird.

Nach einer Weiterbildung der Erfindung weist das Tragelement mindestens ein Stützelement auf, das erhoben zu einer Oberseite des Tragelementes angeordnet ist. Durch das Vorsehen eines oder einer Mehrzahl derartiger Stützelemente wird eine definierte Anlageposition des Deckels an dem Tragelement geschaffen. Mehrere Stützelemente können hierbei derart beabstandet zueinander angeordnet sei, dass eine stabile, das heißt im Wesentlichen spielfreie Ablage des Deckels auf dem Tragelement selbst dann gewährleistet ist, wenn der Abdeckabschnitt des Deckels gewölbt oder anderweitig uneben ausgebildet ist.

Nach einer Weiterbildung der Erfindung liegt der Deckel mit dem Abdeckabschnitt an mindestens drei Auflagepunkten des Tragelementes an. Bei einer Anlage an drei Auflagepunkten ist der Deckel auf dem Tragelement statisch bestimmt gehalten. Die drei Auflagepunkte können hierbei zum Teil oder insgesamt als Stützelemente ausgebildet sein.

Nach einer Weiterbildung der Erfindung ist das Tragelement mit seinem Verbindungsabschnitt an dem Befestigungspunkt des Fußes in einer Aussparung desselben gehalten. Vorteilhaft wird durch das Vorsehen einer Aussparung an dem Befestigungspunkt eine positionsgenaue und reproduzierbare Anbindung des Tragelementes an dem Fuß gewährleistet, so dass einer versehentlichen Fehlmontage und einer hierdurch bewirkten Herabsetzung der Standsicherheit des Deckelhalters vorgebeugt ist.

Nach einer Weiterbildung der Erfindung können das Tragelement und der Fuß lösbar miteinander verbunden sein. Durch die lösbare Verbindung von Tragelement und Fuß kann die Reinigung des Deckelhalters vereinfacht bzw. verbessert werden. Ferner baut der Deckelhalter im demontierten Zustand weniger sperrig, so dass eine platzsparende Lagerung möglich wird.

Nach einer Weiterbildung der Erfindung ist der Fuß L-förmig ausgebildet. Der L-förmige Fuß weist einen ersten Schenkel auf, der sich im Wesentlichen parallel zur Aufstandsebene erstreckt und die Aufstandsfläche aufweist. Ferner weist der L-förmige Fuß einen zweiten Schenkel auf, der in einem Schulterbereich des ersten Schenkels und des zweiten Schenkels im Wesentlichen senkrecht von dem ersten Schenkel abragt und der an dem Endabschnitt des zweiten Schenkels das Tragelement hält. Vorteilhaft kann der Fuß durch die L-Form zugleich eine große Standfläche und eine geringe Masse bzw. ein geringes Volumen aufweisen. Der Fuß ist hierbei schlank ausgebildet und kann aus einem leichten Material, z. B. Kunststoff, hergestellt sein.

Nach einer Weiterbildung der Erfindung ist im Bereich des Fußes ein Ablagebereich zum Ablegen von Kochutensilien, beispielsweise Kochlöffeln, Pfannenmessern oder dergleichen gebildet. Auf diese Weise kann der freie Bereich unter dem Tragelement auch dann zum Ablegen der Kochutensilien genutzt werden, wenn die Aufstandsfläche vergleichsweise groß ausgebildet ist, wie dies beispielsweise bei dem L-förmigen Fuß der Fall sein kann.

Nach einer Weiterbildung der Erfindung weist der Ablagebereich eine Ausnehmung zum zumindest abschnittsweisen Aufnehmen der Kochutensilien auf. Im Bereich der Ausnehmung kann hierbei ein mit einem Hinterschnittbereich versehener Halteabschnitt zum Einlegen wenigstens eines Kochutensils in die Ausnehmung und ein dem Halteabschnitt gegenüberliegender Stützabschnitt zum Auflegen des an dem Halteabschnitt festgelegten Kochutensils ausgebildet sein. Vorteilhaft wird hierdurch eine Möglichkeit zur sicheren Ablage kleinerer Kochutensilien, insbesondere Kochlöffeln, Pfannenmesser oder dergleichen geschaffen. Es ist hierbei sichergestellt, dass von dem Kochutensil abtropfende Flüssigkeiten in der Ausnehmung aufgefangen und gesammelt werden. Eine Verschmutzung umliegender Bereiche der Küchenarbeitsplatte ist somit vermieden.

Zur Lösung der Aufgabe ist die Erfindung in Verbindung mit dem Oberbegriff des Patentanspruchs 15 **dadurch gekennzeichnet, dass** eine Stützstrebe zum Festlegen des Tragelements in der Halteposition an dem Tragelement derart drehbar gehalten ist, dass die Stützstrebe bei Verbringung des Tragelements von der Anlageposition in die Halteposition selbsttätig eine Stützposition einnimmt, in der die Stützstrebe mit einer Randkante derselben in eine ortsfest an einer vertikalen Wand angeordnete Nut eingreift.

Der besondere Vorteil der Erfindung ist darin zu sehen, dass der Topfdeckelhalter infolge des selbsttätigen Verschwenkens der Stützstrebe in die Stützposition in einfacher Weise mit nur einer Hand bedient werden kann. Somit ist eine Inbenutzungnahme des wandgehaltenen Deckelhalters auch dann in einfacher Weise möglich, wenn der abzulegende Deckel bereits vom Topf genommen und mit einer Hand gehalten ist. Ein formschlüssiges Eingreifen der Randkante in die Nut sorgt für die notwendige Stabilität und verhindert ein unbeabsichtigtes Lösen der an dem Tragelement drehbar gehaltenen Stützstrebe. Hierbei kann die Geometrie der Randkante und/oder der Nut so ausgestaltet sein, dass dem Benutzer das Eingreifen haptisch oder akustisch vermittelt wird.

Nach einer Weiterbildung der Erfindung kann die Nut in der Montageplatte angeordnet sein. Vorteilhaft reduziert sich hierdurch der Montageaufwand bei der Anbringung des Deckelhalters. Auf das passgenaue Anbringen einer Nut in eine Regal- bzw. Schrankwand oder in das Mauerwerk kann hierdurch verzichtet werden.

Nach einer Weiterbildung der Erfindung kann das Tragelement über ein bolzenförmiges Verbindungselement drehfest an der Montageplatte gehalten sein. Um das Tragelement von der Montageplatte zu lösen, kann das bolzenförmige Verbindungselement in seine Längsrichtung verschoben und aus dem Drehgelenk entnommen werden. Vorteilhaft bietet sich hierdurch die Möglichkeit, den Deckelhalter zu demontieren und den Tragarm mit der hieran befestigten Stützstrebe zur Säuberung in eine Spülmaschine zu geben.

Weitere Vorteile der Erfindung ergeben sich aus den weiteren Unteransprüchen.

Ausführungsbeispiele der Erfindung werden nachfolgend anhand der Zeichnungen näher erläutert.

### Es zeigen:

- Figur 1a: eine Vorderansicht eines Deckelhalters mit auf einem Tragelement gehaltenen Deckel,
- Figur 1b: eine Seitenansicht des Deckelhalters mit Deckel gemäß Figur 1a,
- Figur 1c: eine perspektivische Darstellung des Deckelhalters mit Deckel gemäß Figur 1a,
- Figur 2a: eine vergrößerte Darstellung eines freien Endes des Tragelementes gemäß Figur 1a in einer Seitenansicht,
- Figur 2b: einen Vertikalschnitt A-A durch das Tragelement gemäß Figur 2a,
- Figur 3: eine perspektivische Darstellung des freien Endes des Tragelementes gemäß Figur 2a,
- Figur 4: eine vergrößerte Darstellung des Deckelhalters gemäß Figur 1a ohne Deckel,
- Figur 5: den auf einer Arbeitsfläche positionierten Deckelhalter gemäß Figur 1a,
- Figur 6: eine Seitenansicht auf einen wandgehaltenen Topfdeckelhalter in einer Halteposition mit auf dem Tragelement gehaltenem Deckel,
- Figur 7: eine perspektivische Darstellung des Deckelhalters gemäß Figur 6 in der Halteposition,
- Figur 8: eine Seitenansicht des Deckelhalters gemäß Figur 6 in der Halteposition,
- Figur 9: eine Vorderansicht des Deckelhalters gemäß Figur 6 in der Halteposition,
- Figur 10: eine Seitenansicht des Deckelhalters gemäß Figur 6 in einer Anlageposition,
- Figur 11: eine Draufsicht auf eine weitere Ausführungsform des Deckelhalters mit L-förmigem Fuß,
- Figur 12: eine perspektivische Darstellung des Deckelhalters gemäß Figur 11,
- Figur 13: eine perspektivische Darstellung des Deckelhalters gemäß Figur 11 mit auf dem Tragelement gehaltenen Deckel,
- Figur 14: eine Seitenansicht des Deckelhalters gemäß Figur 11 mit gehaltenem Deckel und
- Figur 15: eine vergrößerte Darstellung des Bereichs X gemäß Figur 14.

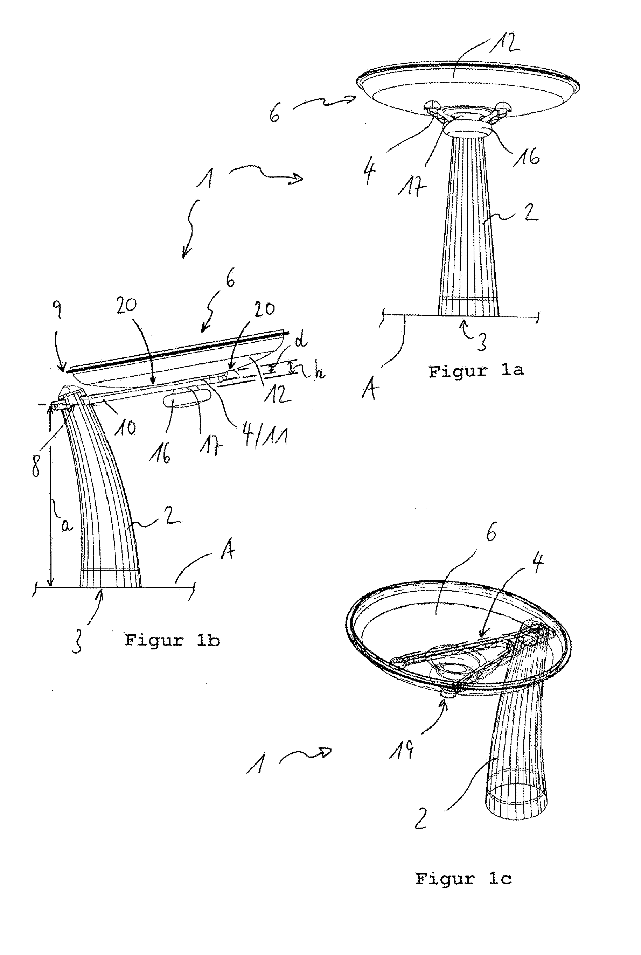

Ein Deckelhalter 1 gemäß der Figuren 1a bis 1c besteht im Wesentlichen aus einem Fuß 2, der mit einer Standfläche 3 auf einer Aufstandsebene A aufgestellt ist, und aus einem an dem Fuß 2 gehaltenen, gegenüber der Aufstandsebene A geringfügig geneigt angeordneten Tragelement 4. Das Tragelement 4 erstreckt sich hierbei in einer Halteebene H und trägt auf einer Oberseite 5 einen Deckel 6. Kern der Erfindung ist es hierbei, dass der Deckel 6 nicht direkt auf der Aufstandsebene A abgelegt wird, sondern dass das Tragelement 4 derart beabstandet von der Aufstandsebene A an dem Fuß 2 gehalten ist, dass unterhalb des auf dem Tragelement 4 gehaltenen Deckels 6 ein freier Raum 7 geschaffen wird. Durch das von der Aufstandsebene A beabstandete Halten des Deckels 6 auf dem Tragelement 4 kann der freie Raum 7 bzw. ein Teil der Aufstandsebene A, die bei Verzicht auf das Vorsehen eines Deckelhalters zur Ablage des Deckels Verwendung finden würde, zum Abstellen anderer Küchenutensilien, beispielsweise Kochlöffeln, Schneebesen, Schüsseln oder Töpfe, für das Bereithalten von Zutaten oder zum Abstellen anderer beim Kochen benötigter Gegenstände, zum Beispiel Kochbücher, genutzt werden.

Der Fuß 2 weist an einem der Aufstandsfläche A zugewandten Ende die Standfläche 3 auf. Ausgehend von der Standfläche 3 ist der Fuß langgestreckt und säulenförmig ausgebildet. Er erstreckt sich hierbei im Wesentlichen senkrecht zur Standfläche 3. In einem Abstand a zu der Standfläche 3 ist ein Befestigungspunkt 8 angeordnet, an dem das Tragelement 4 mit dem Fuß 2 verbunden ist. Der Befestigungspunkt 8 liegt in einem der Standfläche 3 gegenüberliegenden Endabschnitt 9 des Fußes 2. Von der Standfläche 3 in Richtung des Befestigungspunkts 8 ist der Fuß 2 verjüngend ausgebildet. Hierbei weisen die Standfläche 3 und eine beliebige Querschnittsfläche des Fußes eine elliptische bzw. kreisrunde Geometrie auf. Der Abstand a des Befestigungspunkts 8 zur Standfläche 3 ist hierbei so gewählt, dass insbesondere Schüsseln unterhalb des auf dem Tragelement 4 gehaltenen Deckels 6 abgestellt werden können. Der Abstand a beträgt hierzu beispielsweise 8 cm oder mehr.

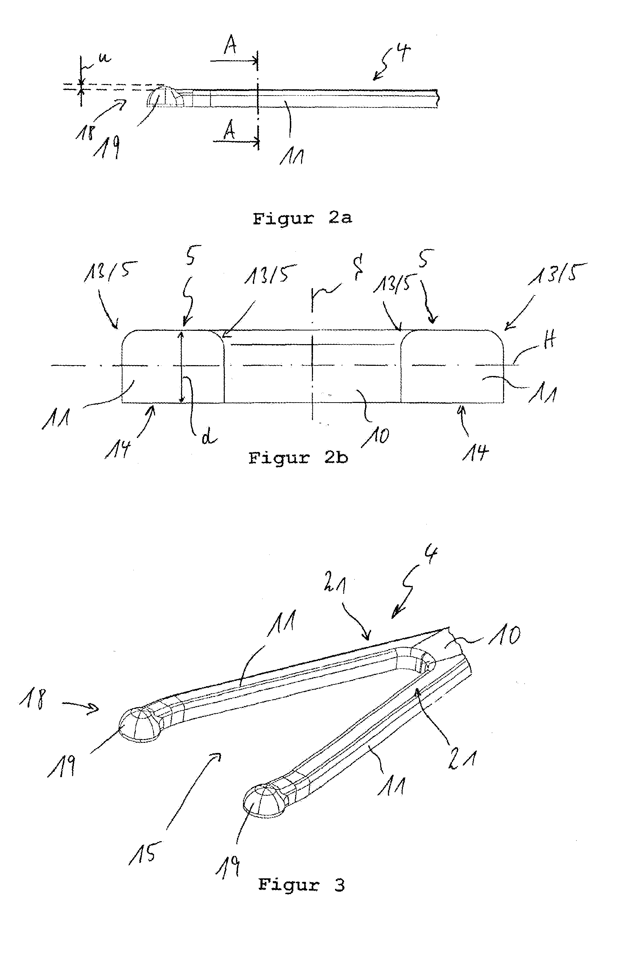

Das an dem Fuß 2 gehaltene Tragelement 4 ist wie der Fuß 2 langgestreckt ausgebildet und definiert so die Halteebene H. Im vorliegenden Beispiel ist die Halteebene H um einen Winkel α von 5° gegen die Aufstandsebene A geneigt angeordnet. Denkbar ist hier auch, dass die Halteebene H und die Aufstandsebene A parallel orientiert sind bzw. einen Winkel α von +/- 20° einschließen. Das Tragelement 4 wird aus einem Verbindungsabschnitt 10, mit dem das Tragelement 4 im Befestigungspunkt 8 an dem Fuß 2 gehalten ist, und aus zwei von den Verbindungsabschnitt 10 abragenden, zueinander V-förmig angestellten Tragarmen 11 gebildet. Die Oberseite 5 des Tragelements 4, die einem tellerförmigen Abdeckabschnitt 12 des Deckels 6 zugewandt ist, ist sowohl im Bereich des Verbindungsabschnitts 10 als auch im Bereich der Tragarme 11 als eine im Querschnitt abgerundete Längsseiten 13 aufweisende Deckelauflagefläche ausgebildet, vergleiche Figuren 2a und 2b. Eine der Oberseite 5 gegenüberliegende Unterseite 14 des Tragelements 4 ist im Querschnitt eben ausgebildet. Hinsichtlich einer zu der Halteebene H senkrechten Symmetrieebene S ist das Tragelement 4 symmetrisch aufgebaut.

Die V-förmig angestellten Tragarme 11 sind gemäß Figur 3 horizontal derart beabstandet zueinander angeordnet, dass zwischen denselben ein V-förmiger Zwischenraum 15 gebildet ist. Der Zwischenraum 15 ist hinsichtlich seiner Geometrie so bemessen, dass ein einen Halteknauf 16 und den Abdeckabschnitt 12 verbindender Steg 17 des auf dem Tragelement 4 gehaltenen Deckels 6 in dem Zwischenraum 15 angeordnet ist. Die Dicke d des Tragelements 4 ist im Bereich der Tragarme 11 zu diesem Zweck geringer als die Höhe h des Stegs 17. Abhängig davon, wie tief der Steg 17 des Deckels 6 von einem freien Ende 18 des Tragelements 4 in Richtung des Verbindungsabschnitts 10 in den Zwischenraum 15 eingebracht ist, ist der Steg 17 mit seitlichem Spiel oder klemmend zwischen den Tragarmen 11 angeordnet.

An dem freien Ende 18 des Tragelements 4 ist jedem Tragarm 11 ein Stützelement 19 zugeordnet. Das Stützelement 19 ist halbkugelförmig ausgebildet und erhaben zu der Oberseite 5 des Tragelements 4 angeordnet. Die Überhöhung ü, die das Stützelement 19 gegenüber der Oberfläche 5 des Tragelements 4 aufweist, ist so bemessen, dass der Abdeckabschnitt 12 des Deckels 6 im Bereich des Stützelements 19 an der Oberfläche 5 des Tragelements 4 anliegt. Weitere Anlagepunkte 20 ergeben sich je nach Geometrie des Abdeckabschnitts 12 des Deckels 6 an der Oberseite 5 des Tragelements 4 im Bereich des Verbindungsabschnitts 10 und/oder des Verbindungsabschnitts nahen Bereichs 21 der Tragarme 11. Um eine stabile und statisch bestimmte Auflage des Deckels 6 auf dem Tragelement 4 zu gewährleisten, sind hierbei mindestens drei Auflagepunkte 20 ausgebildet. Aufgrund der symmetrischen Ausgestaltung des Tragelements 4 und der in der Regel symmetrischen Gestaltung des Deckels 6 können sich jedoch weitere Auflagepunkte, zum Beispiel insgesamt vier, oder ganze Auflagezonen bilden, in denen der Deckel 6 mit dem Abdeckabschnitt 12 flächig an der Oberseite 5 des Tragelements 4 anliegt.

Zur Erhöhung der Auflagestabilität des Deckels 6 auf den Stützelementen 19 kann eine Oberfläche derselben gummiert ausgeführt sein.

Das Tragelement 4 ist in seinem Verbindungsabschnitt 10 in einer nicht dargestellten Aussparung im Bereich des Befestigungspunktes 8 an dem Fuß 2 gehalten. Die Aussparung ist hierbei auf die Geometrie des Verbindungsabschnitts 10 derart abgestimmt, dass der Verbindungsabschnitt 10 formschlüssig in die Aussparung eingesetzt werden kann. Das Tragelement 4 und der Fuß 2 sind hierdurch lösbar miteinander verbunden, und zwar formschlüssig über eine Steckverbindung bzw. kraftschlüssig über eine Rastverbindung.

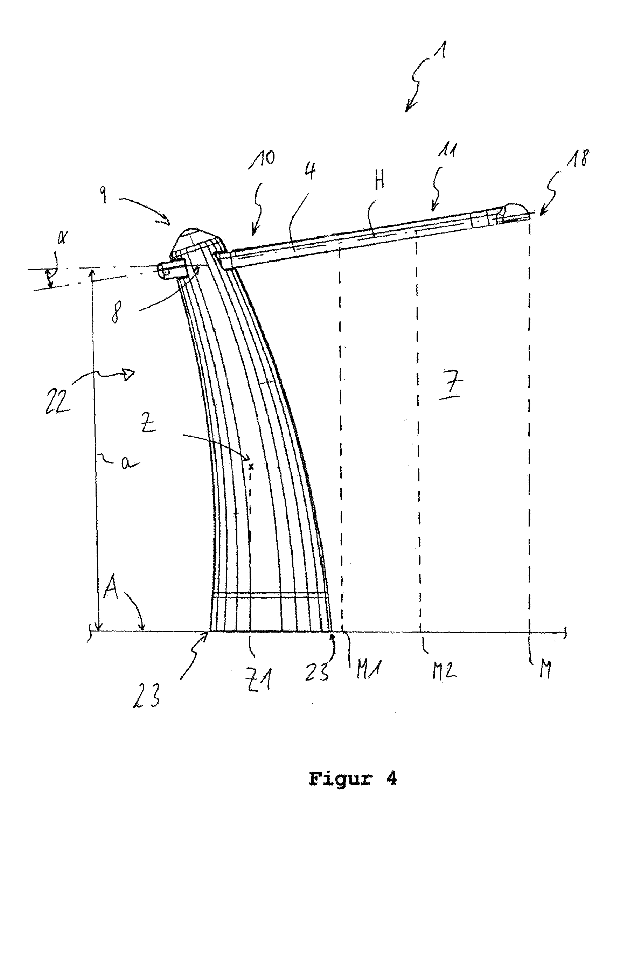

Um eine hinreichende Kippstabilität des Deckelhalters auch bei aufgelegten, mit unter schweren Topf- bzw. Pfannendeckeln 6 aus Glas- oder Gussmaterial zu gewährleisten, sind hinsichtlich Formgebung und Materialauswahl besondere Vorkehrungen getroffen. So ist der Fuß 2 aus einem relativ schweren Material gebildet, beispielsweise Aluminium, Edelstahl, Stein, Porzellan oder dergleichen. Er weist eine Neigung in Richtung einer der dem Deckel 6 haltenden Tragelement 4 abgewandten Rückseite 22 des Deckelhalters 1 auf, so dass bei einer zur der Aufstandsebene A lotrechten Projektion eines Schwerpunkts Z des Fußes 2 auf die Aufstandsebene A der projizierte Schwerpunkt Z' innerhalb des Rands 23 der Standfläche 3, jedoch in Richtung der Rückseite 22 verschoben abgebildet ist. Ferner ist das Tragelement 4 vollständig, insbesondere jedoch im Bereich der Tragarme 11 und des freien Endes 18, aus einem leichten Material, beispielsweise Kunststoff, gebildet. Das vergleichsweise leichte Tragelement 4 kann hierdurch - ohne die Stabilität bzw. Kippsicherheit des Deckelhalters 1 zu gefährden - weit über den Rand 23 der Standfläche 3 hinausragen, vgl. Figur 4. In der vorliegenden Ausführungsform sind die Geometrie und Gewicht des Fußes 2 und des Tragelements derart aufeinander abgestimmt, dass bei einer zu der Aufstandsebene A lotrechten Projektion des Tragelements 4 auf die Aufstandsebene A ein Bereich von einem projizierten freien Ende M bis zu einem projizierten Längsmittelpunkt des Tragelements M1 ebenso außerhalb des Randes 23 der Standfläche 3 des Fußes 2 abgebildet ist wie der Bereich von dem freien projizierten Ende M bis zu dem projizierten Längsmittelpunkt der Tragarme M2. Handelsübliche Deckel 6 können hierbei auf dem Deckelhalter 1 abgelegt werden, ohne dass die Gefahr besteht, dass dieser umkippt.

Nach einer alternativen, nicht dargestellten Ausführungsform kann auf die Ausführung eines massiven, aus einem schweren Material bestehenden Fußes 2 verzichtet werden. Der Fuß 2 kann dann beispielsweise einen Kunststoffmantel aufweisen, in dem zur Stabilisierung und Erhöhung der Kippsicherheit Gewichtselemente eingebracht werden können. Das Tragelement 4 und der Fuß 2 können hierdurch farblich und hinsichtlich des Materials einheitlich gestaltet sein.

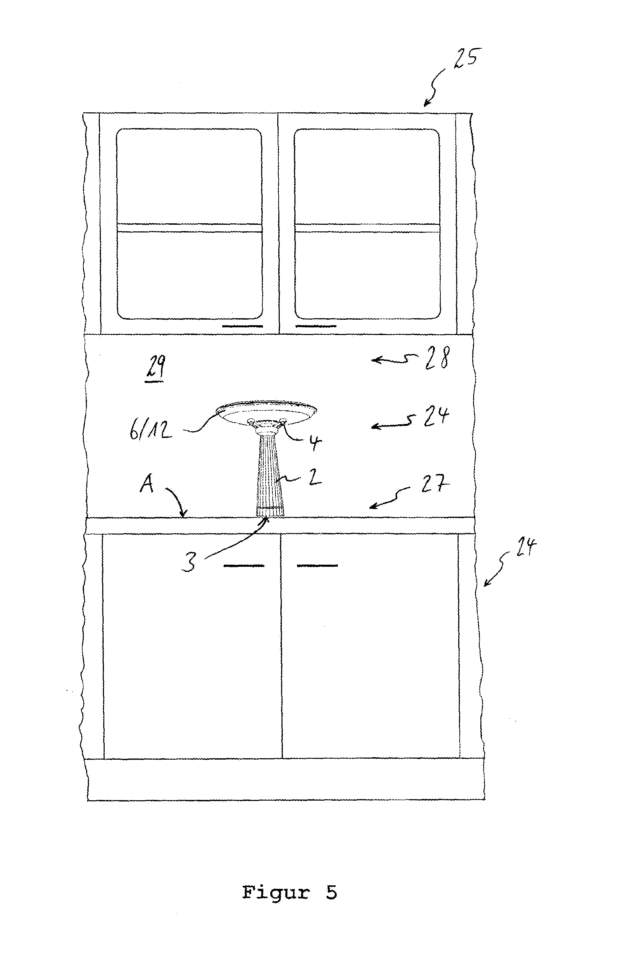

Hinsichtlich der Bauhöhe des Fußes 2 insgesamt und des Abstands a des Befestigungspunkts 8 von der Standfläche 3 wird in dem vorliegenden Ausführungsbeispiel auf typische geometrische Randbedingungen einer Küche geachtet. Gemäß Figur 5 ist der Abstand a derart gewählt, dass der auf dem Tragelement 4 gehaltene Deckel 6 in einem mittleren Abschnitt 24 zwischen einem Küchenoberschrank 25 und einem Küchenunterschrank 26 gehalten ist. Auf diese Weise sind sowohl ein unterer Abschnitt 27 als auch ein oberer Abschnitt 28 frei zugänglich. In dem unteren Abschnitt 27 können in bekannter Weise Küchenutensilien oder dergleichen abgestellt werden. In dem oberen Abschnitt ist die freie Zugänglichkeit von unter dem Oberschrank 25 montierten Lampen oder an einem Fliesenspiegel 29 bereitgehaltenen Werkzeugen gewährleistet. Ebenso wird durch die Begrenzung der Bauhöhe sichergestellt, dass der Deckelhalter 1 überhaupt unter einem Hängeschrank 25 positionierbar ist.

Nach einer alternativen, nicht dargestellten Ausführungsform der Erfindung kann der Tragarm 4 einstückig mit dem Fuß 2 verbunden sein. Hierbei können zwei während der Fertigung separate Bauelemente im Rahmen der Montage beispielsweise über eine Klebverbindung unlösbar miteinander verbunden werden. Alternativ ist vorstellbar, dass der Deckelhalter 1 beispielsweise in einem Urformverfahren als einheitliches Bauteil hergestellt wird, zum Beispiel durch Spritzgießen.

Nach einer weiteren, nicht dargestellten Ausführungsform der Erfindung können in einen Fuß 2 zwei stabförmige, zueinander V-förmig angestellte Tragelemente 4 eingebracht werden. Durch die V-förmige Anordnung der stabförmigen Tragelemente 4 zueinander wird zwischen diesen in bekannter Weise ein Zwischenraum 15 gebildet, in den der Halteknauf 16 bzw. der Steg 17 des Deckels 6 einbringbar ist. Der Deckel 6 liegt dann in bekannter Weise mit dem tellerförmigen Abdeckabschnitt 12 auf der Oberseite 5 der Tragelemente 4 auf.

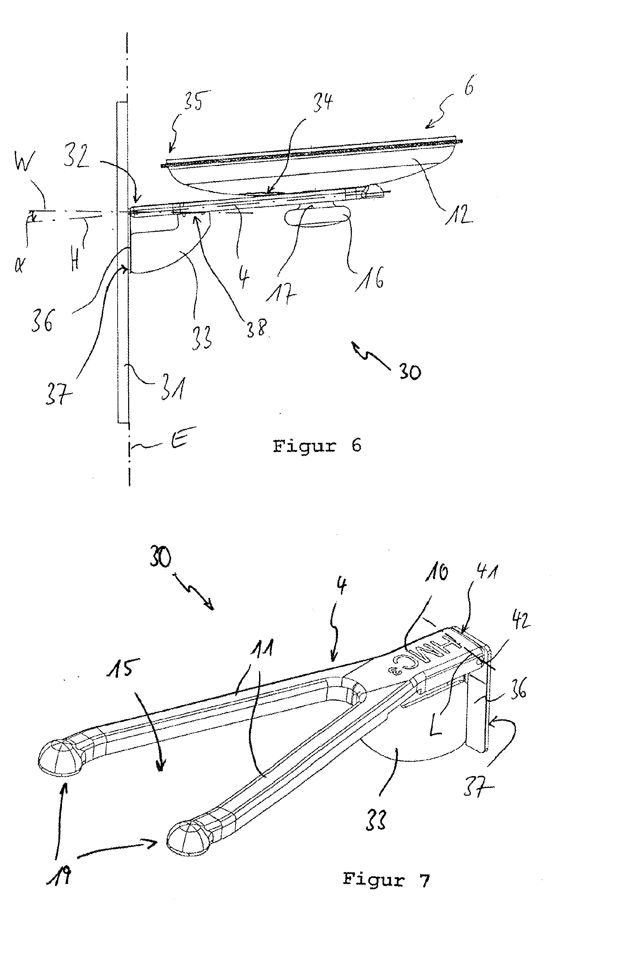

Nach einer alternativen Ausführungsform der Erfindung gemäß den Figuren 6 bis 10 ist ein wandgehaltener Deckelhalter 30 vorgesehen. Der Deckhalter 30 weist eine Montageplatte 36 mit einer eben ausgebildeten, im wandmontierten Zustand normalerweise vertikal orientierten Anlagefläche 37 und ein an der Montageplatte 36 drehbar gehaltenes Tragelement 4 auf. Zur drehbaren Verbindung des Tragelements 4 mit dem Montageträger 36 ist ein erstes Drehgelenk 32 angeordnet, welches ein bolzen- bzw. stiftförmig ausgebildetes Verbindungselement 42 aufweist. Eine Längsachse L des ersten Drehgelenks 36 ist hierbei im wandmontierten Zustand im Wesentlichen horizontal orientiert. Das Verbindungselement 42 kann in seine Längsachsenrichtung L verschoben und aus dem Drehgelenk 32 entnommen werden, so dass das Tragelement 4 von der Montageplatte 36 abgenommen und separat gereinigt werden kann.

Gleiche Bauteile und Bauteilfunktionen weisen gleiche Bezugsziffern auf.

An dem Tragelement 4, welches wie im vorstehenden Ausführungsbeispiel V-förmig zueinander angestellte Tragarme 11 und einen über das erste Drehgelenk 32 mit der Montageplatte 36 verbundenen Verbindungsabschnitt 11 aufweist, ist eine Stützstrebe 33 über ein zweites Drehgelenk 38 schwenkbar gehalten. Die Stützstrebe 33 ist schwertförmig ausgebildet und verfügt auf einer dem zweiten Drehgelenk 38 abgewandten Seite über eine Randkante 39. Mit der Randkante 39 stützt sich die Stützstrebe 33 in einer Halteposition, in welcher gemäß der Figur 6 ein Deckel 6 auf dem Tragelement 4 gehalten werden kann, an der Montageplatte 36 ab. Zur Gewährleistung einer sicheren Positionierung der Stützstrebe 33 und einer hinreichenden Stabilität des Deckelhalters 30 ist an der Montageplatte 36 eine Nut 40 ausgebildet, die in einer Symmetrieebene S des Deckelhalters 30 vertikal verläuft und in die die Stützstrebe 33 in der Halteposition eingreift.

In der Halteposition gemäß der Figuren 6 bis 9 ist eine Halteebene H, welche in Erstreckungsrichtung des Tragelements 4 orientiert angeordnet ist, um einen spitzen Winkel α gegen die Vertikale W geneigt angeordnet. Alternativ kann das Stützelement 33 in der Halteposition vertikal orientiert angeordnet sein. In Bezug auf eine durch die Anlagefläche 37 verlaufende Anlageebene E ist die Halteebene H um einen Winkel β im Bereich von 80 bis 120°, beispielsweise 95° geneigt angeordnet. Die Neigung der Halteebene H ist hierbei so bemessen, dass in dem Deckel 6 zusammenlaufendes Kondensat 34 nicht über einen Rand 35 des Deckels 6 hinauslaufen kann.

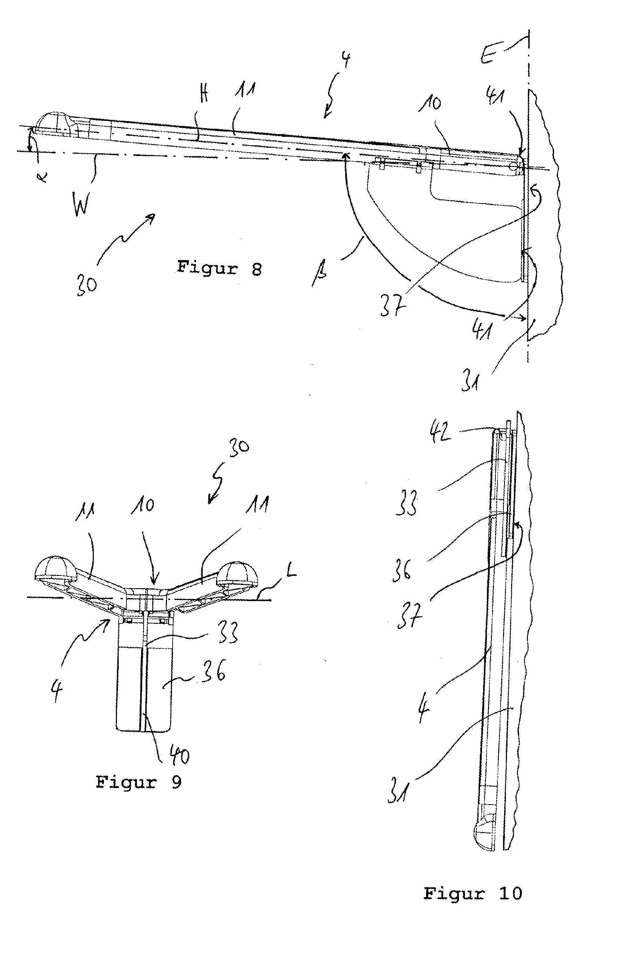

In einer Anlageposition des Deckelhalters 30 gemäß Figur 10 ist der Tragarm um das erste Drehgelenk 32 geschwenkt und parallel zur Anlageebene E orientiert ausgerichtet. Das Stützelement 19 aufweisende freie Ende des Tragelements 4 ist hierbei nach unten geklappt, so dass eine Arretierung des Deckelhalters 30 in der Anlageposition infolge der Einwirkung der Schwerkraft nicht notwendig ist. Die Stützstrebe 33 ist in der Anlageposition derart um das zweite Drehgelenk 38 geschwenkt, dass es sich ebenfalls parallel zu der Anlageebene E erstreckt.

Zur Verbringung des Deckelhalters 30 von der Anlageposition in die Halteposition wird das Tragelement 4 im Uhrzeigersinn aufwärts geschwenkt. Der maximale Schwenkwinkel des Tragelements 4 wird durch eine quer zur Symmetrieebene S verlaufende, hintere Anlagekante 41 des Verbindungsabschnitts 10 begrenzt, sobald die Anlagekante 41 eine der Anlagefläche 37 abgewandte Oberseite der Montageplatte 36 trifft. Die Geometrie des Verbindungsabschnitts 10 ist hierbei so bemessen, dass das Tragelement 4 geringfügig oberhalb der die Halteposition kennzeichnenden Halteebene H blockiert wird.

Während der Aufwärtsbewegung des Tragelements 4 schwenkt die Stützstrebe 33 selbsttätig, das heißt unter Einwirkung der Schwerkraft. Sobald das Tragelement 4 oberhalb der Halteebene H blockiert wird, ist die Stützstrebe 33 unterhalb des Tragelements 4 frei beweglich und infolge der Schwerkraft vertikal orientiert. Die Randkante 39 ist hierbei horizontal beabstandet zu der Nut 40 angeordnet. Beim Absenken des Tragelements 4 in die Halteposition (Drehen desselben im Gegenuhrzeigersinn um das erste Drehgelenk 32) greift die Randkante 39 in die Nut 40 und nimmt so eine Stützposition ein. Der Deckelhalter 30 ist hiermit formschlüssig in der Halteposition gehalten.

Zur Verbringung des Deckelhalters 30 von der Halteposition in die Anlageposition wird das Tragelement 4 aus der Halteebene angehoben, die Stützstrebe 33 aus der vertikalen Orientierung verschwenkt und das Tragelement 4 gegen den Uhrzeigersinn verdreht.

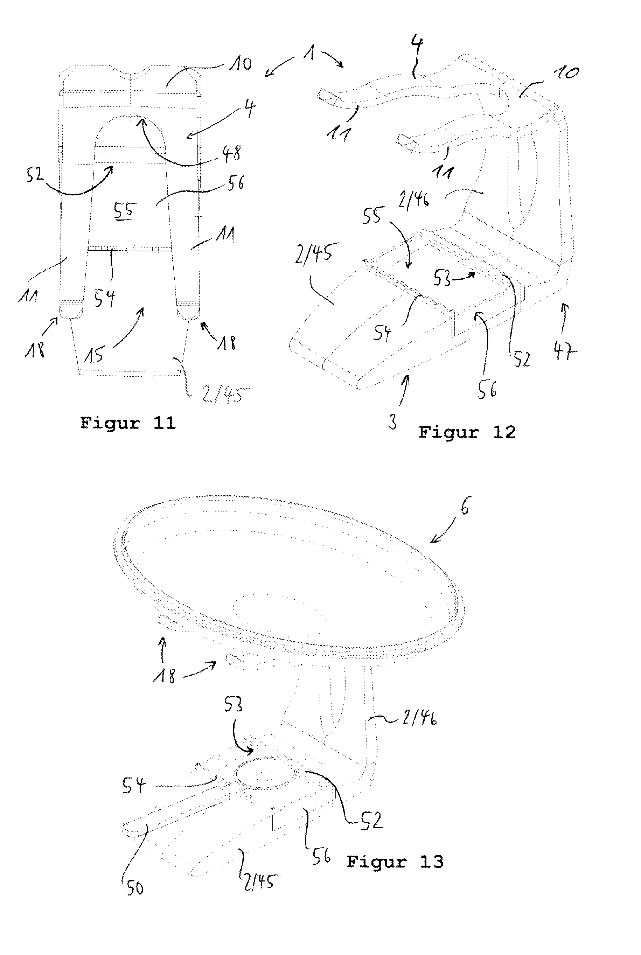

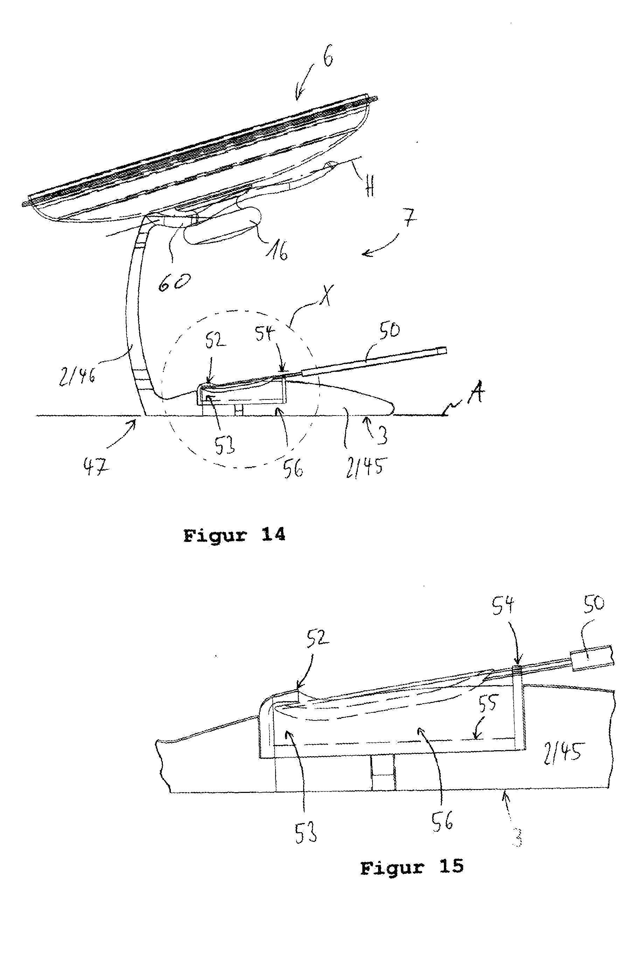

Nach einer alternativen Ausführungsform der Erfindung gemäß der Figuren 11 bis 15 ist der Fuß 2 des Topfdeckelhalters 1 L-förmig ausgebildet. Der Fuß 2 weist einen ersten Schenkel 45 auf, der sich im Wesentlichen parallel zu der Aufstandsebene A erstreckt. Dieser erste Schenkel 45 weist die Standfläche 3 auf, mit der der Fuß 2 auf der Aufstandsebene A aufliegt. Ferner weist der Fuß 2 einen zweiten Schenkel 46 auf, der in einem Schulterbereich 47 mit dem ersten Schenkel 45 verbunden ist. Der zweite Schenkel 46 ragt im Wesentlichen senkrecht von dem ersten Schenkel 45 und vertikal von der Aufstandsebene A ab. Der zweite Schenkel 46 des Fußes 2 ist hierbei zu einer dem freien Ende 18 des Tragelements 4 gegenüberliegenden Rückseite 22 geneigt angeordnet. Im Endabschnitt des zweiten Schenkels 46 ist das Tragelement 4 gehalten. Das Tragelement 4 und die beiden Schenkel 45, 46 des Fußes 2 sind einstückig miteinander verbunden. Das Tragelement 4 ist durch einen Verbindungsabschnitt 10 und zwei von dem Verbindungsabschnitt 10 auf der dem zweiten Schenkel 46 gegenüberliegenden Seite abragende Tragarme 11 gebildet. Innenseiten der Tragarme 11 sind hierbei V-förmig zueinander angestellt und bilden den sich in Richtung des Verbindungsabschnitts 10 verjüngenden Zwischenraum 15. Die freien Enden 18 der Tragarme 11 ragen seitlich über die durch den ersten Schenkel 45 des Fußes 2 definierte Standfläche 3 des Topfdeckelhalters 1 hinaus. Im Bereich des Verbindungsabschnitts 10 sind die Tragarme 11 über eine kreisbogenförmige Verbindungskante 48 des Verbindungsabschnitts 11 miteinander verbunden. An die Verbindungskante 48 kann ein auf den Tragelement 4 aufgelegter Deckel 6 mit dem Halteknauf 16 und/oder dem Steg 17 angelegt werden.

Anders als in den Ausführungsformen der Erfindung gemäß den Figuren 1 bis 10 ist das Tragelement 4 gemäß der Figurn 11 bis 15 quer zu der Halteebene H geschwungen ausgebildet. Die geschwungene Kontur des Tragelements 4 ist derart ausgebildet, dass der Halteknauf 16 des auf dem Tragelement 4 abgestützten Deckels im Bereich einer von der Aufstandsebene A beziehungsweise der Standfläche 3 des Fußes 2 kreisbogenbörmig nach oben abragenden, geschwungenen Ausformung 60 angeordnet ist. Hierdurch kann der Halteknauf 16 des Deckels 6 sowohl beim Einsetzen des Deckels in den Zwischenraum 15 als auch beim Entnehmen des Deckels 6 in einfacher Weise gehalten werden.

Der Topfdeckelhalter 1 weist im Bereich des ersten Schenkels 45 des Fußes 2 einen Ablagebereich 49 zum Ablegen von Kochutensilien, insbesondere Kochlöffeln 50, Pfannenmessern oder dergleichen auf. Der Ablagebereich 49 weist eine Ausnehmung 51 zum zumindest abschnittsweisen Aufnehmen der Kochutensilien (Kochlöffel 50) auf. Randseitig ist der Ausnehmung 51 ein Halteabschnitt 52 mit einem Hinterschnittbereich 53 und einen dem Halteabschnitt 52 zumindest abschnittsweise gegenüberliegender Stützabschnitt 54 zugeordnet. Der mit dem Hinterschnittbereich 53 versehene Halteabschnitt 52 ist derart ausgeformt, dass beispielsweise ein vorderer Bereich des Kochlöffels 50 in den Hinterschnittbereich 53 eingesetzt und von unten an den Halteabschnitt 52 angelegt werden kann. Der Kochlöffel 50 stützt sich hierbei ferner an dem Stützabschnitt 54 ab und ist somit definiert in der Ausnehmung 51 gehalten. Alternativ kann der Kochlöffel 50 auf einem Grund 55 der Ausnehmung 51 sowie an dem Stützabschnitt 54 aufgelegt werden. Der Ablagebereich 49 ist hierbei als eine aus dem Fuß 2 herausnehmbare Schale 56 zum Auffangen von Flüssigkeiten und anderen Verunreinigungen ausgebildet. Die Schale 56 weist die Ausnehmung 51, den Halteabschnitt 52 mit dem Hinterschnittbereich 53 und den Stützabschnitt 54 auf. Durch das Ausbilden einer herausnehmbaren Schale kann der Ablagebereich 49 in einfacher Weise und gründlich gereinigt werden. Durch das Vorsehen des Ablagebereichs 49 bzw. der Schale 56 kann der freie Raum 7 unterhalb des Tragelements 4 zum Ablegen von Kochutensilien (Kochlöffel 50) benutzt werden.

Beispielsweise ist der Abstand a so gewählt, dass zwischen dem gehaltenen Deckel 6 und der Aufstandsebene A ein Behälter positionierbar ist. Der Fuß 2 kann beispielsweise säulenförmig und von der Standfläche 3 in Richtung des Befestigungspunkts 8 verjüngend ausgebildet sein. Der Befestigungspunkt 8 ist an einem der Standfläche 3 gegenüberliegenden Endabschnitt 9 des Fußes 2 angeordnet.

Beispielsweise ist eine Oberseite 5 des Tragelements 4, die einem tellerförmigen Abdeckabschnitt 12 des Deckels 6 zugewandt ist, zumindest abschnittsweise als eine im Querschnitt abgerundete Längsseiten 13 aufweisende Deckelauflagefläche ausgebildet.

Beispielsweise ist der Halteknauf 16 und/oder der Steg 17 mit seitlichem Spiel oder klemmend in ein zwischen den V-förmig zueinander angestellten Tragarmen 11 gebildeten Zwischenraum 15 gehalten.

Beispielsweise weist das Tragelement mindestens ein Stützelement 19 auf, welches erhaben zu der Oberseite 5 des Tragelements 4 angeordnet ist.

Beispielsweise liegt der Abdeckabschnitt 12 des Deckels 6 an mindestens drei Auflagepunkten 20 des Tragelements 4 an.

Beispielsweise ist das Tragelement 4 mit seinem Verbindungsabschnitt 10 an dem Befestigungspunkt 8 des Fußes 2 in einer Aussparung desselben gehalten.

Beispielsweise sind das Tragelement 4 und der Fuß 2 lösbar und formschlüssig und/oder kraftschlüssig und steckbar und/oder rastbar und einstückig und/oder stoffschlüssig miteinander verbunden.

Beispielsweise ist die Nut 40 in der Montageplatte 36 angeordnet und die Stützstrebe 33 schwertförmig ausgebildet.

Beispielsweise ist das Stützelement 33 in der Anlageposition parallel zur Anlageebene E und/oder in der Halteposition vertikal orientiert angeordnet.

Beispielsweise ist das Stützelement 4 über ein bolzenförmiges Verbindungselement 42 drehbar an der Montageplatte 36 gehalten und das Verbindungselement 42 ist zur Lösung der Gelenkverbindung 32 in Längsrichtung L derselben entnehmbar.

## Patentansprüche

1. Deckelhalter, enthaltend einen Fuß mit einer Standfläche zum Abstellen derselben auf eine Aufstandsebene und wenigstens einen von dem Fuß abragenden Tragelement zum Halten eines Deckels, **dadurch gekennzeichnet, dass** sich der Fuß (2) langgestreckt und im Wesentlichen senkrecht zur Standfläche (3) erstreckt, dass das Tragelement (4) in einem vorgegebenen Abstand (a) zu der Standfläche (3) des Fußes (2) mit demselben in einem Befestigungspunkt (8) so verbunden ist, dass der Deckel (6) parallel oder geneigt zur der Standfläche (3) des Fußes (2) orientiert an dem Tragelement (6) gehalten ist, und dass bei einer zu der Aufstandsebene (A) lotrechten Projektion des Tragelements (4) auf die Aufstandsebene (A) mindestens ein Teilbereich (11, 18) des Tragelements (4) außerhalb der Standfläche (3) abgebildet ist.

2. Deckelhalter nach Anspruch 1, **dadurch gekennzeichnet, dass** bei einer zu der Aufstandsebene (A) lotrechten Projektion des Tragelements auf die Aufstandsebene (A) ein Bereich von dem projizierten freien Ende (M) bis zu dem projizierten Längsmittelpunkt des Tragelements (M1) außerhalb der Standfläche (3) des Fußes (2) abgebildet ist.

3. Deckelhalter nach Anspruch 1 oder 2, **dadurch gekennzeichnet, dass** der Fuß (2) zumindest abschnittsweise zu einer dem freien Ende (18) des Tragelements (4) gegenüberliegenden Rückseite (22) geneigt angeordnet ist.

4. Deckelhalter nach einem der Ansprüche 1 bis 3, **dadurch gekennzeichnet, dass** der Fuß (2) massiv und/oder aus einem relativ schweren Material ausgeformt ist.

5. Deckelhalter nach einem der Ansprüche 1 bis 4, **dadurch gekennzeichnet, dass** sich das Tragelement (4) in einer Halteebene (H) erstreckt, die gegenüber der Aufstandsebene (A) um einen Winkel (α) im Bereich von +/- 20° geneigt angeordnet ist.

6. Deckelhalter nach einem der Ansprüche 1 bis 5, **dadurch gekennzeichnet, dass** das Tragelement (4) aus einem Verbindungsabschnitt (10), mit dem das Tragelement (4) an dem Fuß (2) gehalten ist und aus zwei von dem Verbindungsabschnitt (10) abragenden, zueinander V-förmig angestellten Tragarmen (11) gebildet ist.

7. Deckelhalter nach Anspruch 6, **dadurch gekennzeichnet, dass** bei einer zu der Aufstandsebene (A) lotrechten Projektion des Tragelements (4) auf die Aufstandsebene (A) ein Bereich von dem projizierten freien Ende (M) bis zu dem projizierten Längsmittelpunkt der Tragarme (M2) außerhalb der Standfläche (3) des Fußes (2) abgebildet ist.

8. Deckelhalter nach Anspruch 6 oder 7, **dadurch gekennzeichnet, dass** eine Dicke (d) der Tragarme (11) geringer ist als eine Höhe (h) eines den Abdeckabschnitt (12) mit einem Halteknauf (16) des Deckels (6) verbindenden Stegs (17).

9. Deckelhalter nach einem der Ansprüche 1 bis 8, **dadurch gekennzeichnet, dass** der Fuß (2) L-förmig ausgebildet ist mit einem ersten Schenkel (45), der parallel zu der Aufstandsebene (A) erstreckt ist und die Standfläche (3) aufweist, und mit einem zweiten Schenkel (46), der in einem Schulterbereich (47) der Schenkel (45, 46) senkrecht von dem ersten Schenkel (45) abragt und der an dem Endabschnitt (9) des zweiten Schenkels (46) mit dem Tragelement (4) verbunden ist.

10. Deckelhalter nach einem der Ansprüche 1 bis 9, **dadurch gekennzeichnet, dass** im Bereich des Fußes (2) ein Ablagebereich (49) zum Ablegen von Kochutensilien, insbesondere Kochlöffel (50), Pfannenmessern oder dergleichen ausgebildet ist.

11. Deckelhalter nach einem der Ansprüche 1 bis 10, **dadurch gekennzeichnet, dass** der Ablagebereich (49) eine Ausnehmung (51) zum zumindest abschnittsweisen Aufnehmen der Kochutensilien (Kochlöffel (50)) aufweist.

12. Deckelhalter nach einem der Ansprüche 1 bis 11, **dadurch gekennzeichnet, dass** der Ausnehmung (51) randseitig ein mit einem Hinterschnittbereich (53) versehener Halteabschnitt (52) zum Einlegen wenigstens eines Kochutensils (Kochlöffel (50)) in den Ablagebereich (49) und ein dem Halteabschnitt (52) gegenüberliegender Stützabschnitt (54) zum Auflegen des an dem Halteabschnitt (52) festgelegten Kochutensils (Kochlöffel (50)) zugeordnet sind.

13. Deckelhalter nach einem der Ansprüche 1 bis 12, **dadurch gekennzeichnet, dass** der Ablagebereich (49) als eine aus dem Fuß (2) herausnehmbare Schale (56) zum Auffangen von Flüssigkeit und anderen Verunreinigungen ausgebildet ist, wobei die Schale (56) die Ausnehmung (51) und/oder den Halteabschnitt (52) und/oder den Stützabschnitt (54) aufweist.

14. Deckelhalter nach einem der Ansprüche 1 bis 13, **dadurch gekennzeichnet, dass** die Tragarme (11) des Tragelements (4) im Bereich des Verbindungsabschnitts (10) über eine kreisbogenförmige Verbindungskante (48) des Verbindungsabschnitts (10) miteinander verbunden sind.

15. Deckelhalter, enthaltend eine Montageplatte mit einer sich in einer Anlageebene (E) erstreckenden Anlagefläche zur Wandbefestigung der Montageplatte und wenigstens ein an der Montageplatte drehbar gehaltenes Tragelement zum Halten eines Deckels, wobei das wenigstens eine Tragelement von einer Anlageposition, in der eine Erstreckungsrichtung des Tragelements parallel zu der Anlageebene orientiert gehalten ist, in eine Halteposition drehbar ist, in der sich das Tragelement in einer Halteebene erstreckt, die gegenüber der Anlageebene um einen Winkel geneigt angeordnet ist, **dadurch gekennzeichnet, dass** eine Stützstrebe (33) zum Festlegen des Tragelements (4) in der Halteposition an dem Tragelement (4) derart drehbar gehalten ist, dass die Stützstrebe (33) bei Verbringung des Tragelements (4) von der Anlageposition in die Halteposition selbsttätig eine Stützposition einnimmt, in der die Stützstrebe (33) mit einer Randkante (39) derselben in eine ortsfest an einer vertikalen Wand (31) angeordnete Nut (40) eingreift.
